# EUROPEAN PATENT SPECIFICATION

(11) **EP 0 416 331 B1**
(45) Date of publication and mention of the grant of the patent: **17.05.1995**
(21) Application number: 90115578.8
(22) Date of filing: 14.08.1990
(51) Int. Cl.: G05B 19/418

(54) **Line computer**
Line Computer
Microprocesseur en ligne

(30) Priority: 31.08.1989 JP 224939/89; 31.08.1989 JP 224940/89; 29.01.1990 JP 6149/90 U; 05.03.1990 JP 52990/90; 10.04.1990 JP 94339/90; 09.05.1990 JP 47643/90 U
(43) Date of publication of application: 13.03.1991
(60) Divisional application: 94117872.5
(73) Proprietor: Yokogawa Electric Corporation, Tokyo 180 (JP)
(72) Inventor: Tairaku, Hirokazu, Hachioji-shi, Tokyo (JP); Inoue, Kenichi, Tama-shi, Tokyo (JP); Ito, Chiaki, Fuchu-shi, Tokyo (JP); Takimoto, Kenji, Fuchu-shi, Tokyo (JP); Tanido, Shigetoshi, Tokyo (JP)
(74) Representative: Henkel, Feiler, Hänzel & Partner

(56) References cited:
- DE-A- 3 410 430
- DE-A- 3 421 516
- GB-A- 2 136 174
- JP-A-63 188 247
- US-A- 4 251 858
- US-A- 4 253 148
- US-A- 4 365 297

## Description

### BACKGROUND OF THE INVENTION

### Field of Invention

This invention relates to a line computer used for controlling a manufacturing line control system; and more particularly, to an improvement of function for a CPU installed in the line computer so that it may work smoothly.

### Description of the Prior Art

Prior art document US-A-4 870 590 discloses a manufacturing line control system which uses line computers. The line computer described in this patent is raised in the present invention as prior art.

In the first place, the configuration of peripheral circuits around a CPU board of the line computer is explained.

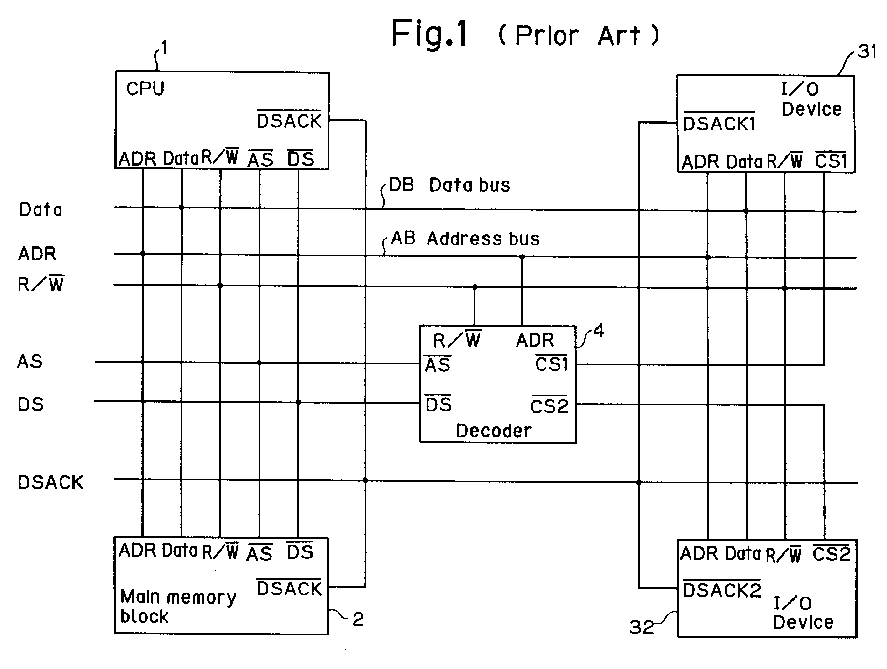

Fig. 1 shows main part of the conventional line computer system, in which such a high speed CPU as 68020 or 68030 which works at 25 MHz clock or 33MHz clock is used, together with I/O devices which work at low speed.

In this figure, CPU 1 is connected to a main memory block 2 and low speed I/O devices 31 and 32 through data bus DB, address bus AB and other signal lines. Address signal ADR, read/write signal R/W̅, address strobe signal A̅S̅, and data strobe signal D̅S̅ are input to a decoder 4 from CPU 1. From decoder 4, chip select signals C̅S̅1̅ and C̅S̅2̅ are output to I/O devices 31 and 32. Further, data strobe acknowledge signals DSACK, DSACK1, and DSACK2 are transmitted to a single signal line from respective blocks every time when these blocks transmit or receive the data.

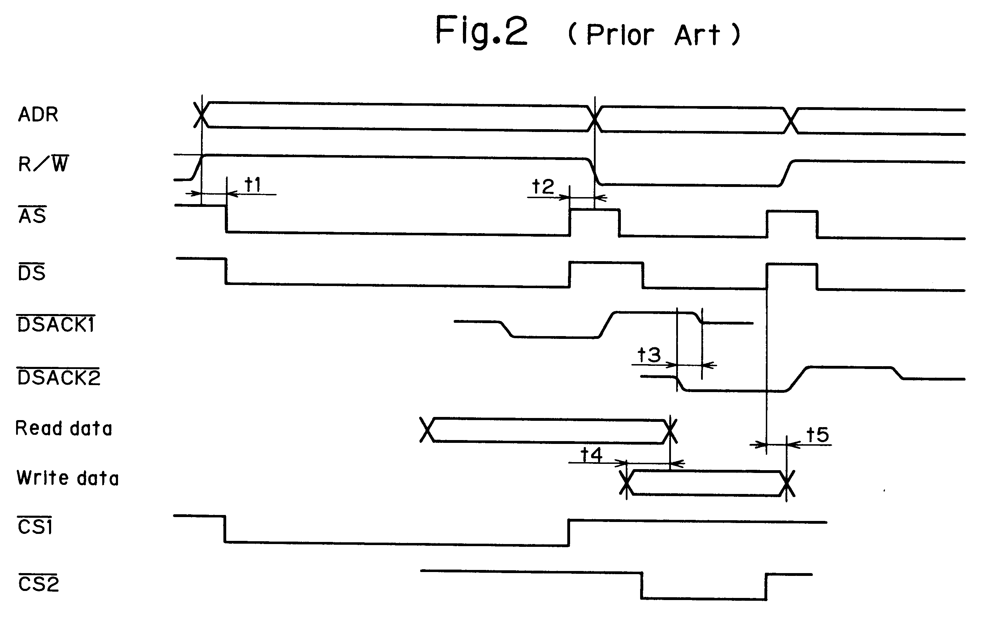

Fig. 2 is a time chart showing operation of the above system. Assuming that CPU 1 has started read cycle for I/O device 31, address ADR, address strobe signal A̅S̅(L), and data strobe signal D̅S̅(L) are transmitted from CPU 1. Decoder 4 interprets these signals and then sends chip select signal C̅S̅1̅(L) to I/O device 31. In response to this, I/O device 31 transmits read data corresponding to address ADR, to data bus DB. CPU 1 introduces this read data in accordance with data strobe acknowledge signal D̅S̅A̅C̅K̅1̅(L). Read cycle ends by this operation.

Next, assuming that CPU 1 has started write cycle for I/O device 32, address strobe signal A̅S̅(L) is transmitted from CPU1. A little later, data strobe signal D̅S̅(L) is transmitted. Decoder 4 interprets and then sends chip select signal C̅S̅2̅(L) to I/O device 32.

On the other hand, CPU 1 transmits write data to data bus DB. After introducing this write data, I/O device 32 functions to change data strobe acknowledge signal D̅S̅A̅C̅K̅2̅ to "L" state. Write cycle ends by this operation.

The system shown in this figure repeats the read cycle and the write cycle as mentioned in the above. However, the above mentioned conventional system has the following problems.
(1) In the conventional system, address strobe signal A̅S̅(L) is asserted immediately after the cycle starts, and negated immediately before the cycle ends. Therefore, both set time t1 and hold time t2 of address ADR are too short for the low speed I/O devices to secure reliable function, and therefore, for these low speed I/O devices, process time is not enough.
(2) In the conventional system, while the last data strobe acknowledge signal D̅S̅A̅C̅K̅1̅ does not change to high impedance, the next data strobe acknowledge signal D̅S̅A̅C̅K̅2̅ becomes active (L). In this occasion, signal collision having collision time t3 occurs on the same line.
(3) In the conventional system, occasionally, write cycle is executed immediately after read cycle. In this case, if the write data were sent to data bus DB from CPU 1 when the last time read data exists in the same data bus, data collision occurs between these two data during time t4.
(4) Since data strobe signal D̅S̅(L) is canceled immediately before the end of write cycle, hold time t5 of write data is not enough for the low-speed I/O device.

### SUMMARY OF THE INVENTION

It is an object of the invention to overcome the aforementioned drawbacks of prior art and to provide a line computer suitable for generating a bus timing having enough time margin and using a high speed CPU and low-speed I/O devices.

To solve this object the present invention provides a line computer as specified in claim 1.

### BRIEF DESCRIPTION OF DRAWINGS

Fig 1 is a block diagram showing a main part of the conventional line computer.

Fig. 2 is a time chart showing function of the apparatus shown in Fig. 1.

Fig. 3 is a block diagram showing a main part of a line computer in accordance with this invention.

Fig. 4 is a time chart showing function of the apparatus in accordance with the invention.

Fig. 5 is a block diagram showing a main part of other line computer of the invention.

Fig. 6 is a diagram showing a total system wherein the line computer of the invention is used in a manufacturing line control system.

Fig. 7 is a block diagram showing a CPU board of the line computer of this invention.

Fig. 8 is a part of a diagram showing circuit configuration of a calendar clock used in the line computer of the invention.

Figs. 9 and 10 are time charts showing function of the calendar clock shown in Fig. 8.

Fig. 11 is a block diagram showing structure of a character display control part used in the line computer of the invention.

Fig. 12 is a time chart showing function of the character display control part shown in Fig. 11.

Fig. 13 is a schematic diagram showing connection of the I/O board installed in the line computer of the invention.

Fig. 14 is a schematic diagram showing hardware concept of the I/O board installed in the line computer of the invention.

Fig. 15 is a schematic diagram showing software concept of the I/O board installed in the line computer of the invention.

Fig. 16 is a schematic diagram showing connection of floppy disk drives installed in the line computer of the invention.

Fig. 17 is a diagram showing allocation of software programs in user memory area when different language programs are loaded in the line computer of the invention.

Figs. 18 and 19 are explanatory diagrams showing function for converting C library.

Fig. 20 is a flow chart showing function of the system by the invention when compiler type language is loaded.

### DETAILED DESCRIPTION OF PREFERRED EMBODIMENTS.

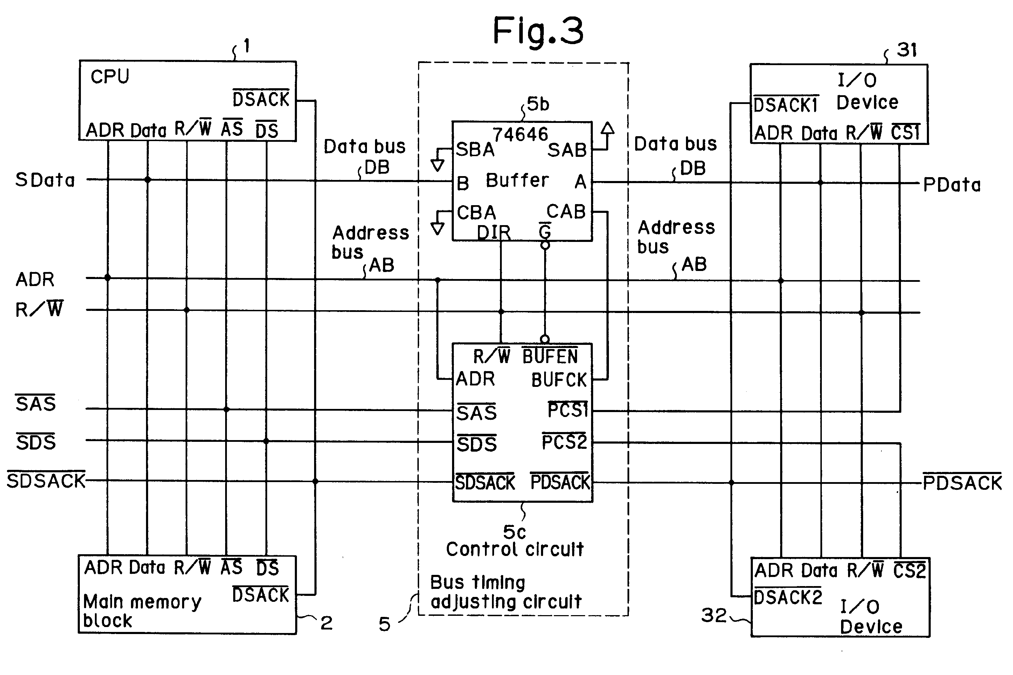

Fig. 3 shows a block diagram of a bus timing adjusting circuit 5 of this invention.

Structural feature of this bus timing adjusting circuit is that in place of a decoder (#4 in Fig.1) installed in a conventional apparatus, buffer 5b and control circuit 5c are provided.

Buffer 5b is provided so as to divide data bus DB connecting I/O devices 31 and 32. SData represents data transferred between buffer 5b and CPU 1. PData represents data transferred between buffer 5b and I/O devices 31, 32. By the existence of buffer 5b, collision of these data does not occur on data bus DB.

Control circuit 5c receives address strobe signal A̅S̅(S̅A̅S̅) (L) and data strobe signal D̅S̅(S̅D̅S̅) (L) applied from CPU 1, and functions to delay these signals. Further, control circuit 5c sends these signals as chip select signals P̅C̅S̅1̅, P̅C̅S̅2̅(C̅S̅1̅, C̅S̅2̅ ) (L) to I/O devices 31 and 32. Transmission of chip select signals P̅C̅S̅1̅, P̅C̅S̅2̅(L) is prohibited a fixed time faster than the time when address strobe signal A̅S̅ and data strobe signal D̅S̅ are negated. Read/write signal R/W̅ is also inputted to control circuit 5c. When CPU 1 starts write cycle, control circuit 5c generates buffer enable signal B̅U̅F̅E̅N̅ to buffer 5b in accordance with address strobe signals A̅S̅(L) and data strobe signal D̅S̅(L). When CPU 1 starts read cycle, control circuit 5c generates buffer enable signal B̅U̅F̅E̅N̅, and latch timing signal B̅U̅F̅C̅K̅ for latching the data from I/O devices 31 and 32.

Namely, based upon buffer enable signal BUFEN and read/write signal R/W̅ (DIR signal), the side of data bus DB where data in buffer 5b shall be transmitted is decided.

Further, control circuit 5c receives data strobe acknowledge signal P̅D̅S̅A̅C̅K̅ (D̅S̅A̅C̅K̅1̅, D̅S̅A̅C̅K̅2̅), and sends data acknowledge signal S̅D̅S̅A̅C̅K̅ to CPU 1. Further, buffer 5b receives read/write signal R/W̅, and uses this signal as DIR signal to decide inputting or outputting direction of buffer 5b. For instance, IC 74646 is used as buffer 5b, and a logic circuit is used control circuit 5c for setting the above logic.

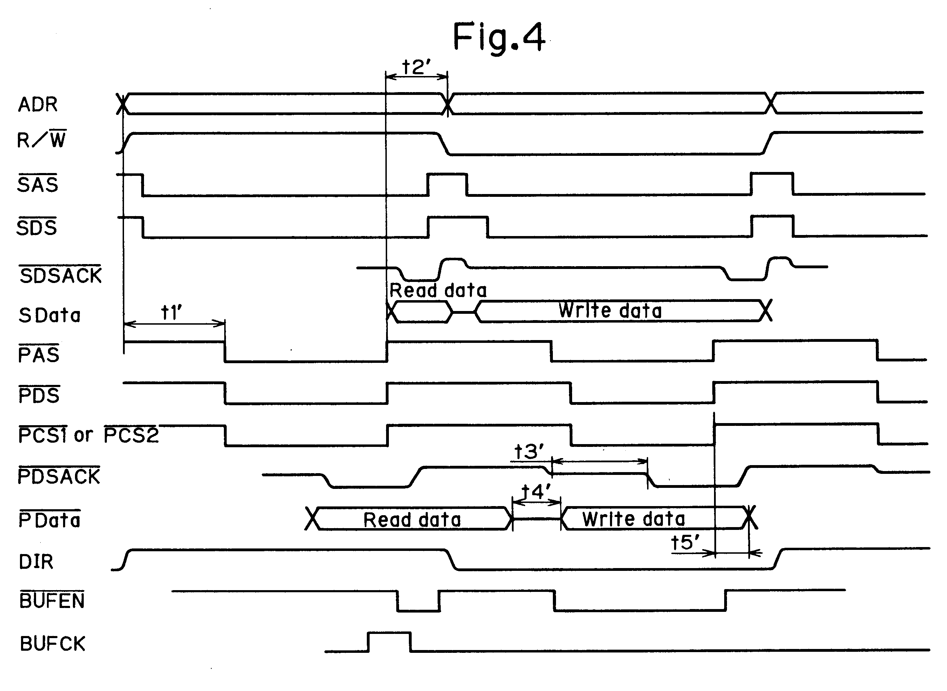

Fig. 4 is a time chart showing function of bus timing adjusting circuit 5. Assuming that CPU 1 starts read cycle, CPU 1 transmits address ADR and read/write signal R/W̅ (H), and asserts address strobe signal A̅S̅(S̅A̅S̅) (L) and data strobe signal D̅S̅(S̅D̅S̅) (L). At this time, I/O direction DIR of buffer 5b is in H state. Control circuit 5c functions so as to delay both address strobe signal S̅A̅S̅(L) and data strobe signal S̅D̅S̅(L) by time t1′, and generates internal address strobe signal P̅A̅S̅(L) and internal address strobe signal P̅D̅S̅(L). And control circuit 5b sends chip select signal P̅S̅C̅1̅(L) or P̅S̅C̅2̅(L) to I/O device 31 or 32 in accordance with value of address ADR.

Thus, read data PData is transmitted to data bus DB from a specified I/O device in correspondence to address ADR. And at the same time, data strobe acknowledge signal P̅D̅S̅A̅C̅K̅(D̅S̅A̅C̅K̅1̅ or D̅S̅A̅C̅K̅2̅) (L) is transmitted from the I/O device.

Further, control circuit 5c sends latch timing signal B̅U̅F̅C̅K̅(H) to buffer 5b so as to store read data PData in buffer 5b. At this time, control circuit 5c functions to prohibit internal address strobe signal P̅A̅S̅(L), internal data strobe signal P̅D̅S̅(L), and chip select signal P̅C̅S̅1̅(L).

Later, control circuit 5c functions, to buffer 5b, to enable timing signal B̅U̅F̅E̅N̅ (L) for necessary period. Thus, read data SData is transmitted to data bus DB on the CPU side. Then, control circuit 5c transmits data strobe acknowledge signal S̅D̅S̅A̅C̅K̅(L). Based upon this signal, CPU 1 introduces data SData and read cycle ends by this operation.

Meanwhile, assuming that CPU 1 starts write cycle, CPU 1 asserts address ADR, read/write signal R/W̅(L), address strobe signal S̅A̅S̅(L), and a little later, data strobe signal S̅D̅S̅ (L). Then, CPU 1 transmits write data SData. Control circuit 5c functions so as to delay address strobe signal SAS(L) and data strobe signal S̅D̅S̅(L), and generates internal address strobe signal P̅A̅S̅(L) and internal data strobe signal P̅D̅S̅(L) in the same manner as in the above read cycle. And control circuit 5c sends chip select signal PSC1(L) or PSC2(L) to I/O device 31 or 32 in accordance with the value of address ADR. By the existence of the above delay time, the state of signal line PDSACK becomes high impedance (time t3′). At this time, I/O direction DIR of buffer 5b is made L state by read/write signal R/W̅.

Then, control circuit 5c transmits enable signal B̅U̅F̅E̅N̅ (L) to buffer 5b, which causes write data SData to pass through the inside of buffer 5b. Thus, control circuit 5c function to transmit write data PData to data bus DB on the I/O device side.

The I/O device sends back data strobe acknowledge signal P̅D̅S̅A̅C̅K̅(L), after it introduces write data PData.

Then, control circuit 5c negates internal address strobe signal P̅A̅S̅(L), internal data strobe signal P̅D̅S̅(L), and chip select signal P̅C̅S̅1̅(L) or P̅C̅S̅2̅(L). Further, control circuit 5c negates buffer enable signal B̅U̅F̅E̅N̅(L), and asserts data strobe acknowledge signal S̅D̅S̅A̅C̅K̅(L) to CPU 1.

As the result of this, CPU 1 negates address strobe signal S̅A̅S̅(L), data strobe signal S̅D̅S̅(L), and further, data strobe acknowledge signal S̅D̅S̅A̅C̅K̅(L). And write cycle ends by this operation.

As described in the above, control circuit 5c functions to delay transmission of address strobe signal S̅A̅S̅(L) and data strobe signal S̅D̅S̅(L) from CPU 1 so as to generate chip select signal P̅C̅S̅1̅(L) or P̅C̅S̅2̅(L), and further, prohibits transmission of internal data strobe signal P̅D̅S̅(L) and chip select signal P̅C̅S̅1̅(L) or P̅C̅S̅2̅(L) before address strobe signal S̅A̅S̅(L) and data strobe signal S̅D̅S̅(L) from CPU 1 are negated. Therefore, this invention has following advantages:
(1) Sufficient time can take for set time t1 and hold time t2 of address ADR.
(2) After the last time transmission of data strobe acknowledge signal P̅D̅S̅A̅C̅K̅(L) ends, sufficient time t3′ is maintained in high impedance state.
(3) In the write cycle, enough hold time t5′ can be taken for write data PData.

Further, in this invention, since buffer 5b is arranged between CPU 1 and I/O devices 31 and 32, so as to separate both data transmitted from CPU 1 and I/O devices 31 and 32, such disadvantage can be avoided, that the data in the previous cycle and the data in the present cycle collide on data bus DB. Namely, high impedance state shown by time t4′ is guaranteed.

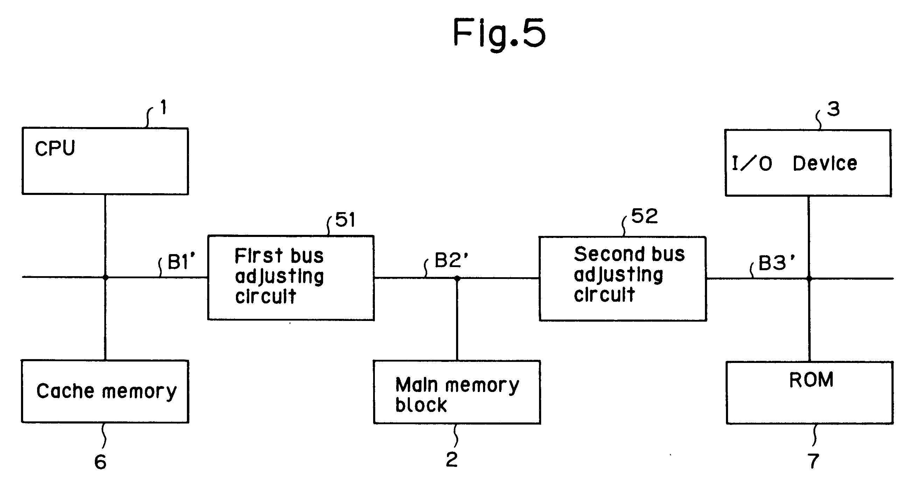

Fig. 5 shows one example in which bus timing adjusting circuits 51 and 52 are applied to a system provided with cache memory. In this example, the first bus timing adjusting circuit 51 is provided between high speed bus B1′ side where CPU 1 and cache memory 6 are connected and intermediate speed bus B2′ side where main memory block 2 is connected, and the second bus timing adjusting circuit 52 is provided between intermediate speed bus B2′ side and low speed bus B3′ side where I/O device 3 and ROM 7 are connected.

The first and second bus timing adjustment circuits 51 and 52 have similar configuration to the circuit shown in Fig. 3, function similarly. Accordingly, CPU 1 can access to each block at a optimum speed.

In accordance with this embodiment, as for the high speed bus B1′ side, CPU 1 can function at high speed and therefore, its maximum performance can be obtained. On the other hand, as for the low speed bus B3′ side, low speed I/O device 3 can function at low speed and therefore, its certain operation can be secured. Accordingly, a system with highly excellent cost performance can be configured.

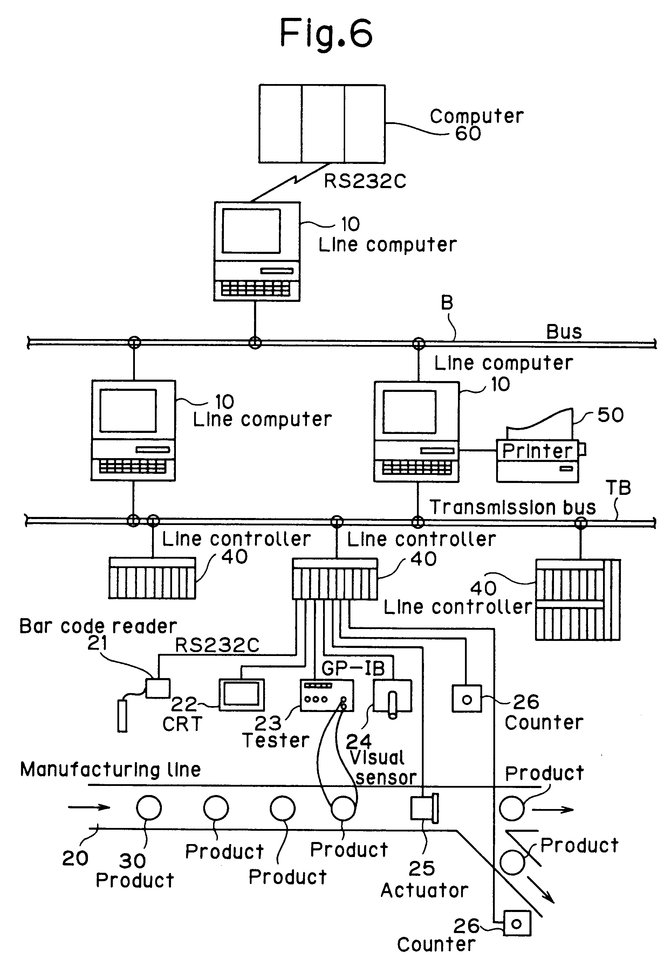

Turning now to Fig. 6, a line computer 10 is connected to a transmission bus TB to which a line controller 40 is connected. Computer 10 performs various processing functions with respect to products 30 passing through manufacturing line 20.

Computer 10 gathers data from line controller 40 and sends instructions thereto. Computer 10 also outputs data from line controller 40, if desired for booking through a printer 50. Computer 10, connected to bus B, is disposed at, for example, a central control room, and can communicate with other line computers 10, with the host side intermediate or large scale computer 60 for sending information as to the state of the manufacturing line 20 by way of ordinary transmission standard signal line, such as RS232C.

Controller 40 directly controls the operations of a bar code reader 21, which reads out, through RS232C, a product code of product 30 passing through manufacturing line 20, i.e. an automatic inspection line; CRT 22 which displays output results; a tester 23, such as an electrical voltage tester, for testing an operation of product 30 through GP-IB line; a visual sensor 24 for external appearance test; an actuator 25 for selecting good or inferior products in response to output signal from visual sensor 24; and a counter 26 for counting the good or inferior product.

This invention is a line computer having a CPU board in which such a bus timing adjusting circuit is installed.

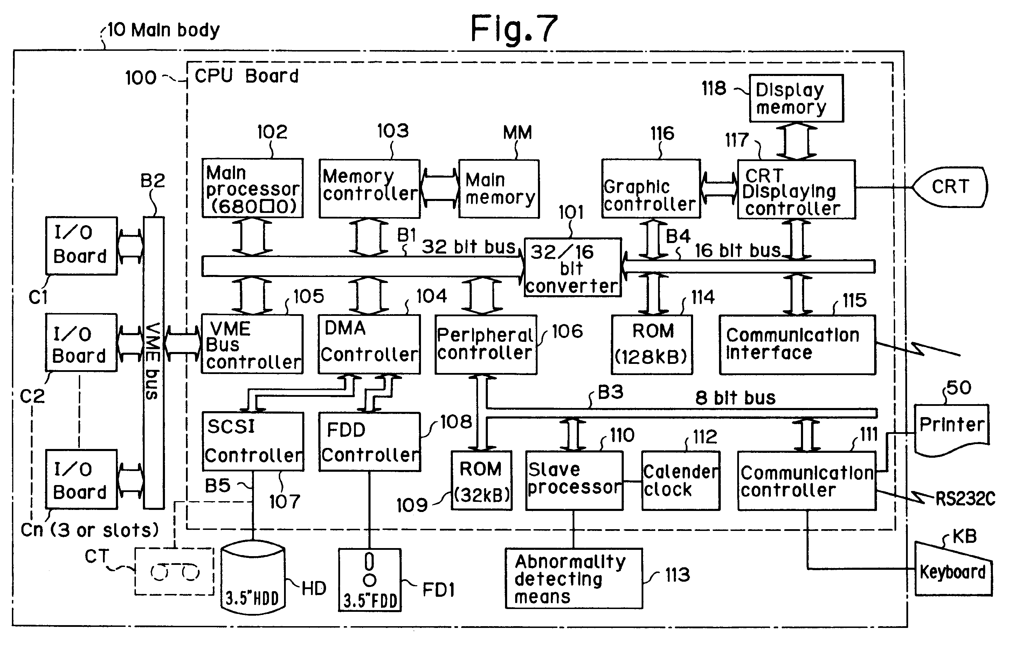

Fig. 7 is a block diagram showing such CPU board 100.

In this example, the above mentioned bus timing adjusting circuit is used as 32/16 bit converter 101. To 32 bit high speed bus B1, main processor 102 (68020, 68030) which operates at high speed, memory controller 103 for controlling main memory MM, DMA (Direct Memory Access) controller 104, VME-bus controller 105 and peripheral controller 106 are connected. VME-bus means Versa Module Europe bus, a bus developed by Motorola for their own microprocessors. DMA controller 104 controls data transmission from main memory MM to SCSI controller 107 provided with hard disks or FDD controller 108 provided with floppy disks, and vice versa. VME-bus controller 105 controls optional communication I/O boards c1, c2 ... cn connected to VME-bus B2. These optional I/O boards, c1, c2 ... cn are used for BSC communcation, Ethernet communication, GP-IB communcation, or MAP communication.

Peripheral controller 106 is connected to 8 bit bus B3, to which ROM 109, slave processor 110, and communication controller 111 are connected. Communication controller 111 functions as an interface for printer 50, key board KB, and such a transmission line as RS232C.

Slave processor 110 is provided with calendar-clock 112 which has such function as calendar function, clock function, or interruption function for interrupting to the software timer. Further, slave processor 110 functions to process signals applied from abnormality detecting means 113 for detecting abnormality of cooling fans or abnormal temperature rise. Further more, slave processor 110 carries out processing of key board inputs applied through communication controller 111, serial communication processing (RS232C), or controlling or printer 50 in accordance with printer drive instructions.

For the sake of operation by slave processor 10, load of main processor 102 is reduced considerably, and thus, main processor 102 can work smoothly.

On the other hand, 32/16 bit converter 101 functions to connect 16 bit bus B4 to which low speed I/O devices are connected, with high speed 32 bit bus B1. In this example, ROM 114 (128KB), communication interface 115, graphic controller 116, CRT displaying controller 117 are provided in 16 bit bus B4. To CRT displaying controller 117, display memory 118 is connected. graphic controller 116, CRT displaying controller 117 and display memory 118 compose a block for controlling CRT display.

As indicated in the above, 32/16 bit converter 101 adjusts operation timing of high speed main processor 102 and operation timing of low speed I/O devices, thereby to make sufficient time margin.

Interruption function to the software timer is carried out to reduce time error in calendar-clock 112 provided in slave processor 110.

In the conventional structure, separate clock generators are used for generating a real time clock for CPU and for generating a standard clock to run software program. In the conventional structure, when electricity is turned on, the present time is calculated by adding a value counted by the software timer to the time read from the real time clock. Accordingly, when the computer system runs continuously for long time (several months), time difference yields between the value indicated by the real time clock and the value counted by the software timer, and therefore, in the conventional structure, it is difficult to recognize correct time in the above case.

In this invention, even though the computer system runs for long time or even though power of the computer system is on/off switched, a clock for identifying the software program can work correctly. In this invention, an identical crystal oscillator is used for generating standard clock for the software timer and also for generating the real time clock, so that error between the software timer and the real time clock is not accumulated.

In this invention, means for generating interruption signal to the software timer is used to reduce the above time error, which is constituted by a first counting means and a second counting means. The first counting means exerts interruption upon the software timer a fixed times (the first set value), and then, the second counting means exerts interruption upon the software timer a fixed times (the second set value). The first and second counting means are switched alternately to eliminate the above error.

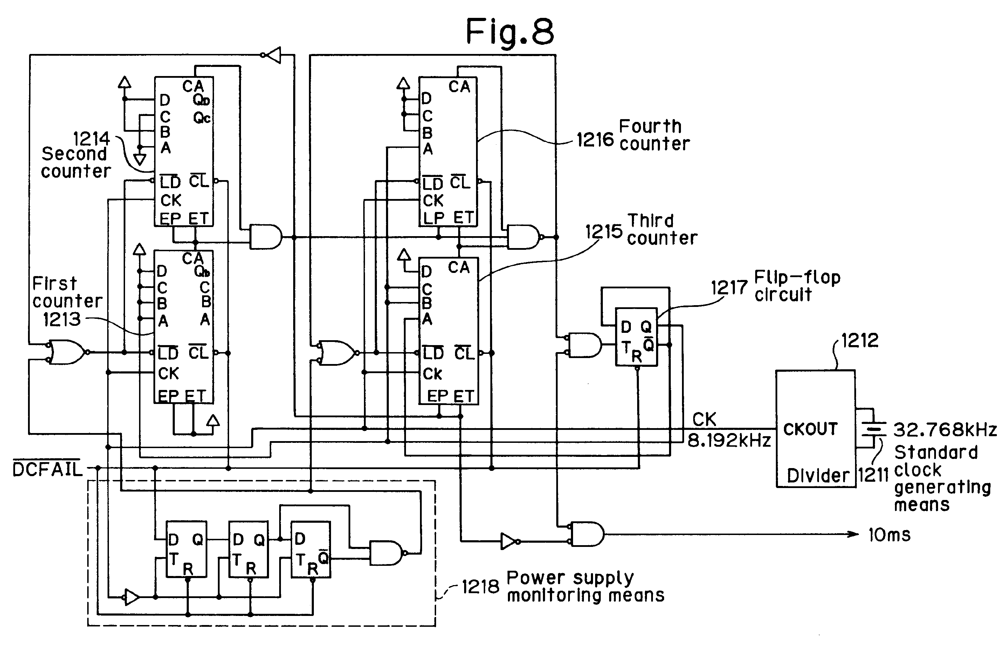

Fig. 8 shows one example of interruption signal generating means to the software timer. Assuming that interruption to the software timer is carried out every 10ms. Standard clock generating means 1211 outputs 32.768 kHz clock as real time clock. Divider 1212 frequency-divides the above clock of 32.768 kHz into 4, and generates 8.192 kHz clock. The first counter 1213, the second counter 1214, the third counter 1215 and the fourth counter 1216 are 4 bit type up-counters. Flip-flop circuit 1217 is provided to switch operation mode and gives instruction to respective counters to change initial count values.

Power supply monitoring means 1218 monitors on/off state of the power supply, power failure or restoration of the power supply, and gives loading signal L̅D̅ for the count set value to respective counters in accordance with signal D̅C̅F̅A̅I̅L̅ generated when electricity is turned on.

Function as to divided clock CK 8.192 kHz and interruption 10ms to the software timer will be explained in the following.

The period of divided clock CK(8.192kHz) is approximately 0.112 ms. Even though this value is made integer times, resultant value never equals to 10ms. That is, it takes 9.887ms for counting 81 divided clocks, and on the other hand, it takes 10.009ms for counting 82 divided clocks. Interruption is carried out when 81 divided clocks are counted or when 82 divided clocks are counted. As the result, is is possible to keep permissible error less than 1%. Further, if operation, which counts 82 divided clocks CK, is repeated 23 times, and then, if operation, which counts 81 divided clocks CK, is repeated 2 times, the total number of the divided clocks is as follows:$\text{82*23 + 81*2 = 2048}$

If 2048 divided clocks were converted to time, it is equivalent to 250ms, and if interruption were carried out every 250ms (2048 clocks), the cycle of the interruption is equivalent to the integer times (25 times) of 10ms. In this case, such an error less than 1% as described in the above can not be accumulated.

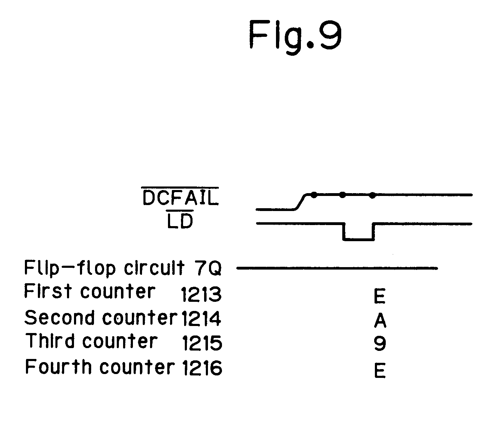

Fig. 9 is a time chart showing initial state of the device. When electricity is applied, signal D̅C̅F̅A̅I̅L̅ turns to H, and the device generates load signal L̅D̅(L). As the result, E(hexadecimal) is set to the first counter 1213, A(hexadecimal) is set to the second counter 1214, 9(hexadecimal) is set to the third counter 1215 and E(hexadecimal) is set to the fourth counter 1216. The first counter 1213 and the second counter 1214 compose 82 number counter, and the third counter 1215 and the fourth counter 1216 compose 23 number counter.

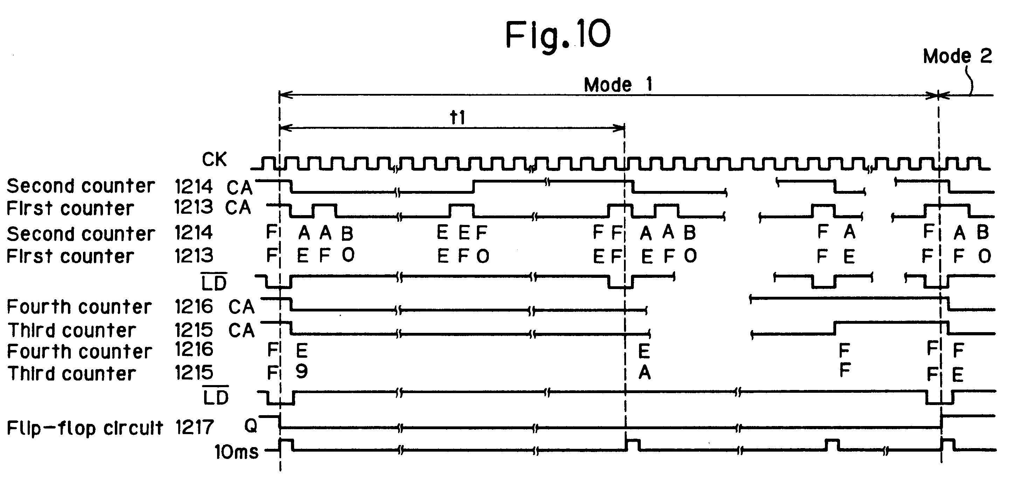

Fig. 10 is a time chart showing function of the calendar clock in the invention.

Mode 1 shows the reset state of flip-flop circuit 1217. At the beginning of time t1, E(hexadecimal) is set to the first counter 1213 and A(hexadecimal) is set to the second counter 1214, and further, 9(hexadecimal) is set to the third counter 1215 and E(hexadecimal) is set to the fourth counter 1216.

From this state, the calendar clock in the invention starts to count divided clock CK. The first counter 1213 generates carry output CA(H) when the first counter 1213 counts clock CK up to F. The second counter 1214 counts carry output CA(H) from the first counter 1213. The first counter 1213 and the second counter 1214 count 82 clocks of divided clock CK in time duration t1, and after 10.009ms from the beginning, transmit 10ms interruption signal (H).

The third counter 1215 and the fourth counter 1216 compose 23 number counter, which counts AND (logical multiplication) of carry output CA from the first counter 1213 and carry output CA from the second counter 1214. That is, the 23 number counter generates an output after the operation for counting 82 clocks of divided clock CK is repeated 23 times (the first set value).

On the basis of the carry outputs from the third counter 1215 and the fourth counter 1216, flip-flop circuit 1217 is inverted from reset state to set state, and the state of the device is changed to mode 2.

In this mode, F(hexadecimal) is set to the first counter 1213, A(hexadecimal) is set to the second counter 1214. These counters compose a 81 number counter. Further, E(hexadecimal) is set to the third counter 1215, and F(hexadecimal) is set to the fourth counter 1216. These counters compose a binary counter.

In mode 2, the third counter 1215 and the fourth counter 1216 count 81 clocks of divided clocks CK, and after 9.8871ms, transmits 10ms interruption signal to the software timer. The third counter 1215 and the fourth counter 1216 generate carry outputs CA after operation for counting 81 clocks of divided clock CK is repeated 2 times (the second set value).

On the basis of the carry outputs, flip-flip 1217 is inverted from set state to reset state, and the state of the device is change to mode 1.
In short, the calendar clock in the invention functions as follows:

In the first mode, operation of counting 82 clocks of divided clock CK is carried out 23 times, an interruption signal of 10.009ms being generated in each operation. After that, the device is changed to the second mode. In this mode, operation of counting 81 clocks of divided clock CK is carried out 2 times, an interruption signal of 9.887ms being generated in each operation.

Based upon the above operation, the calendar clock of the invention can generate an interruption signal having no time error to the software timer.

Moreover, the calendar clock of the invention can set the device to initial state in accordance with signal D̅C̅F̅A̅I̅L̅ applied from power supply monitor 1218 and can restart operation for generating interruption signal, even though the power supply is shut down in operation.
As described in the above, the calendar clock of the invention used to run the software program can advance correctly and does not generate error, even though the computer system is operated continuously for a long time or the power supply is shut down in operation.

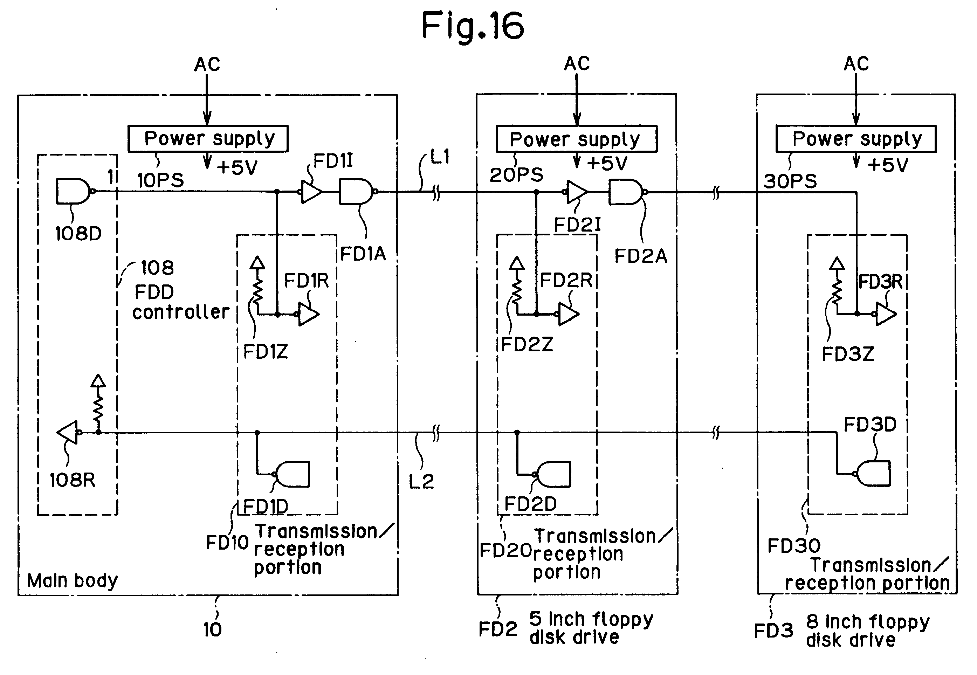

Returning to Fig. 7, 16 bit bus B4 includes 128kB ROM 114 and communication interface 115 connected to other line computers or other line controllers so as to conduct data exchange. Further, 16 bit bus B4 includes graphic controller 116 which takes part in graphic displaying and CRT displaying controller 117 provided with display memory 118. Graphic controller 116 writes graphic data in a frame buffer area in display memory 118. This display memory 118 also has an area for storing character display data, whereby CRT controller 117 conducts CRT display control in mixture both the graphic data and the character data. In this invention, the above object can be attained by such a simply structured line computer using small number of chips or gates.

Namely, in the invention, the memory areas of a single memory element is divided into multiple areas to store character codes, attribute data, and font pattern in each area.

When display operation starts, the character control apparatus conducts time sharing operation in 1 display cycle, so that read operation of the code area, read operation of the attribute area, read/write access to the CPU, and read operation of the font area are carried out in time sharing manner in one display cycle, or so that simultaneous read operation of the code area and the attribute area, read/write access to the CPU, and read operation of the font area are carried out in time sharing manner in one display cycle.

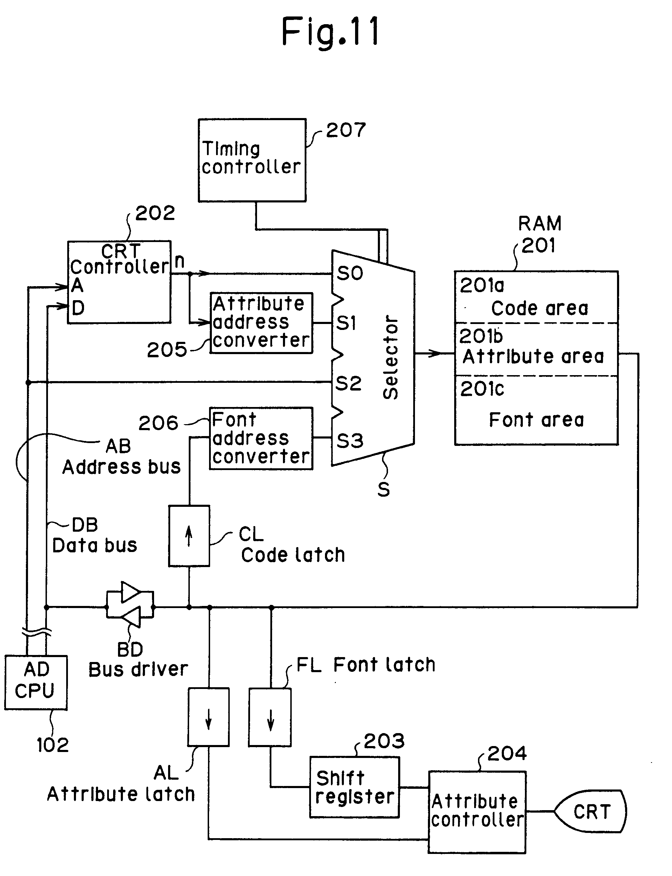

Fig. 11 is a block diagram showing structure of a character displaying apparatus of the invention. Structural feature of this embodiment is that a single RAM 201 is divide into 3 memory area, that is, code area 201a, attribute area 201b, and font area 201c to store previously character code, attribute data and font pattern in respective data.

When display of character is instructed from main processor 102, CRT controller 202 generates display address signal used for scanning. In accordance with the display address, the font pattern is applied to shift resister 203. Attribute controller 204 executes CRT displaying by making reference to these font pattern and attribute information.

Detailed explanation as to structure and function of this apparatus is done in the following.

Display address n generated from CRT controller 202 is applied to terminal SO of selector S and to attribute address converter 205. This attribute address converter 205 receives display address n from CRT controller 202, and makes scan address in attribute area 201b so as to read out the attribute data which corresponds directly to the character code stored in code area 201a. Then, attribute address converter 205 sends a converted address to terminal S1 of selector S.

Display address n from terminal SO of selector S is applied to code area 201a in RAM 1041, so as to read out corresponding character code. The read out character code is latched by code latch CL, and then is sent to font address converter 206.

Font address code converter 206 converts the applied character code to font address code so as to read out the corresponding font pattern from font area 201c in RAM 201, and sends this font address to terminal S3 of selector S.

Attribute data and font pattern read out from RAM 201 are latched by attribute latch AL and font latch FL respectively.

On the other hand, address bus AB which is connected to CPU is connected to terminal S2 of selector S, and data bus DB is connected to bus driver BD.

Timing controller 207 is a block to control respective timing of selector S, attribute latch AL and font latch FL.

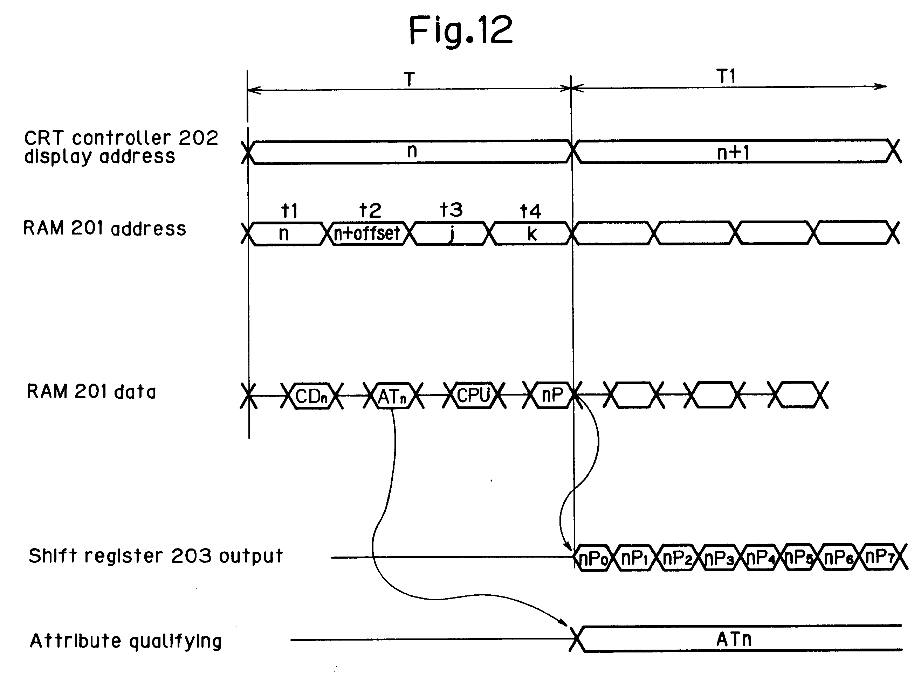

In accordance with a time chart in Fig. 12, function of the apparatus will be explained.

Display cycle T starts when display address n is applied from CRT controller 202. By the timing output from timing controller 207, terminal SO of selector S is selected, and then character code CDn is read out from code area 201a in RAM 201 according to display address n, and the read out data is latched to code latch CL (period t1).

Then, terminal S1 of selector S is selected, output (address n for attribute address area + offset) of attribute controller 204 is applied to attribute area 201b in RAM 201. In accordance, with this attribute address, attribute data ATn is latched with attribute latch AL (period t2). In this case, attribute data ATn is delayed for a time necessary for qualifying serial display pattern data later.

Then, terminal S2 of selector S is selected, and in period t3, main processor 1 executes random access to RAM 201, in accordance with address transmitted from main processor 1. Further, terminal S3 is selected, and access to font area 201c in RAM is executed in accordance with the font address applied from font address converter 206. The read out font pattern np is latched with font latch FL (period t4).

In next display cycle T1 of which display address is n+1, display data stored in RAM 201 is read out in the same manner as in the above. On the other hand, font pattern np (np0, np1, np2...) of font latch FL is loaded shift resister 203. Font pattern np is sent to attribute controller 204 together with attribute data ATn from attribute latch AL. Thus, display is executed with CRT.

As described in the above, in the apparatus of the invention, RAM 201 is divided into multiple areas and different data are stored in these areas separately. And in 1 display cycle, RAM access is carried out by time-sharing processing. If the width of the data is sufficiently large, both character code CDn and attribute data ATn can be accessed at the same time.

In the character display controller, memory area is divided into multiple areas, and in the respective parts, code data, attribute data and font data are stored. And when these data are displayed, the data are read out by a time-sharing manner from the above respective areas. Therefore, the numbers of memory elements can be reduced in this invention.

Further, in Fig. 11, if CRT controller 202, shift resister 203, attribute controller 204, attribute address converter 205, font address code converter 206, timing controller 207, selector S, code latch CL, font latch FL, attribute latch AL, and bus BD could be configured with gate array, the number of pins can be made minimum, and the number of total elements can be reduced remarkably.

Returning now to Fig. 7, explanation for the periphery of VME-bus controller 105 connected to 32 bit bus B1 is conducted in the following. VME-bus controller 105 is a control block to control, through VME-bus B2, I/O boards C1, C2, ... which are board type, optional equipments for processing communication.

In detail, these I/O boards includes, for example:
(1) an I/O board having interface function to connect with other line computers;
(2) an I/O board having interface function with lower-level controllers which conduct, between field instruments, signal transmission and signal reception for such signals as contact signals, analog signals or digital signals;
(3) an I/O board having interface with such an auxiliary memory as a cartridge tape device, or a floppy disk device;
(4) an I/O board having communication facility with GP-IB instruments;
(5) an I/O board having interface function which satisfies such standards as RS232C, RS422, or RS485 etc.;
(6) an I/O board between semiconductor manufacturing apparatus and computers, structured in accordance with such communication procedure as SECS (SEMI Equipment Communications Standard, SEMI:Semiconductor Equipment and Materials Institute );
(7) An I/O board which supports BSC(Binary Synchronous Communication) communication;
(8) An I/O board which supports Ethernet communication; or
(9) an I/O board which supports MAP(Manufacturing Automation Protocol ) communication.

In the conventional apparatus, a board driver provided in each I/O board monitors, by use of a timer, response from the I/O board where the main processor 102 makes access, and detects failure of the I/O board from the time when time is up. However, in the conventional apparatus, when the I/O board fell into inoperative state due to hardware trouble or software trouble, the main processor side could not notice the trouble of the I/O board until the time was up in the timer.

Therefore, the conventional apparatus has such disadvantage that the effect of failure might spread to the entire system, the total system might be downed, or some kinds of troubles might be invited.

In this invention, abnormality of each I/O board is promptly notified to a main processor, so that the effect of the failure may be made minimum. Namely, in this invention, the I/O board outputs a fall signal when the I/O board detects by itself abnormality. The board driver which receives the fail signal from the main processor, gives self diagnosis instruction to a corresponding I/O board to the board driver.

If the result of the self-diagnosis were abnormal, said I/O board is cut off, and further, said board driver is assumed as an error driver.

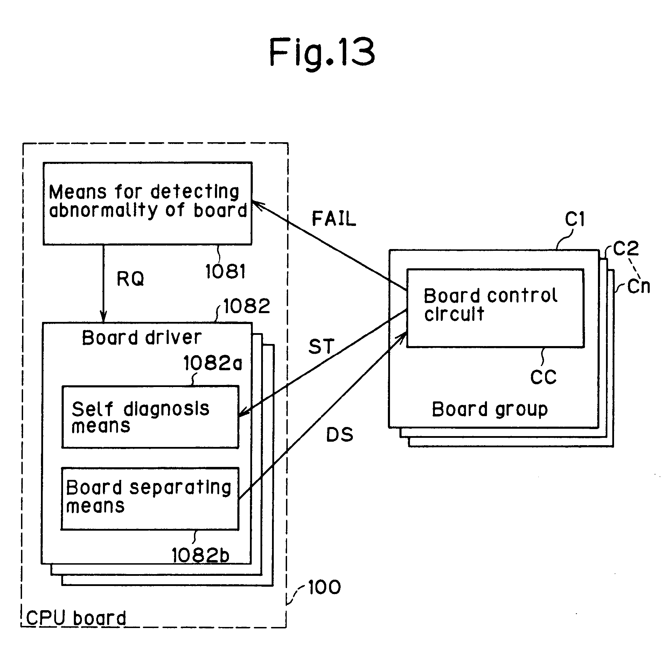

Fig. 13 is a schematic diagram which shows system concept for abnormality detection in this invention, in which main processor 102, VME-bus controller 105, and plural I/O boards C1, C2 ... Cn are included. In this figure, CPU board 100 is connected, through VME-bus controller 105, to plural I/O boards C1, C2 ... Cn. Board control circuit CC which functions to output fail signal FAIL to CPU board 100, is provided in each I/O board.

In CPU board 100, means 1081 for detecting abnormality of board is provided, which functions to generate diagnosis request signal when fail signal FAIL is applied from board control circuit CC, and further, board driver 1082 is provided in each I/O board C1, C2 ... Cn.

This board driver 1082 is software executed by main processor 102, main memory MM and VME-bus controller 105 shown in Fig. 7. This board driver 1082 includes following functions:
(1) normal function to control regular operation of the I/O board;
(2) self-diagnosis function 1082a to conduct diagnosis in accordance with the self-diagnosis request RQ and to receive the result ST of the self-diagnosis; and
(3) function 1082b to separate, in accordance with the result ST of the self-diagnosis, the troubled I/O board from CPU board 100, and to change the concerned board driver 1082 to error state so as to stop the operation of the board driver.

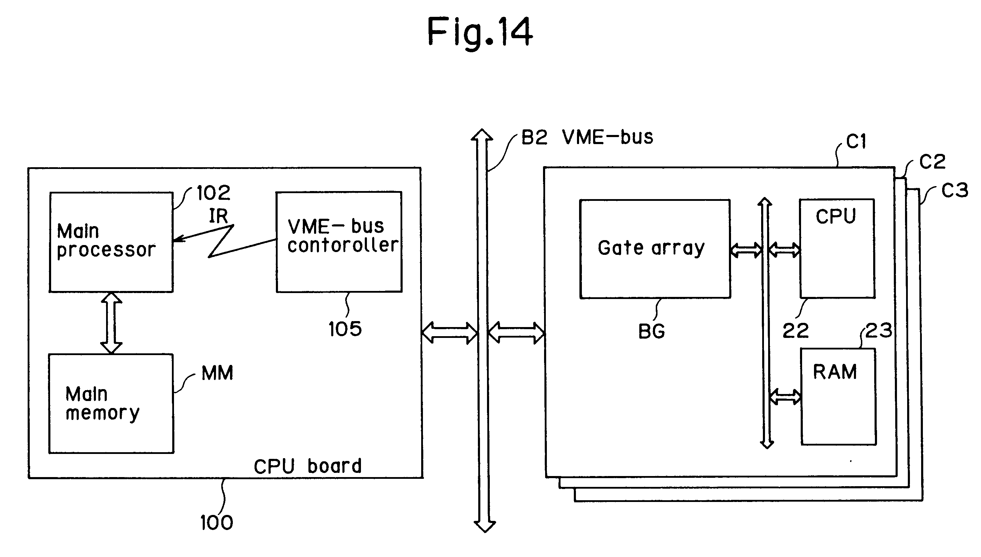

Fig. 14 is a schematic diagram which shows conceptional structure of the hardware in this invention. By this structure, VME-bus controller 105 is constituted by gate array, and further in each I/O board, gate array BG is arranged. When the installed I/O board becomes abnormal (or normal), gate array BG on the I/O board side generates (or terminates) fail signal FAIL, and transmits the normal (or abnormal) status of the I/O board through an internal register.

Further, fail signal line is provided in VME-bus B2, thereby to inform fail signal FAIL generated on the I/O board side. VME-bus controller 105 functions to send fail signal FAIL, as an interrupt signal IR, to main processor 102.

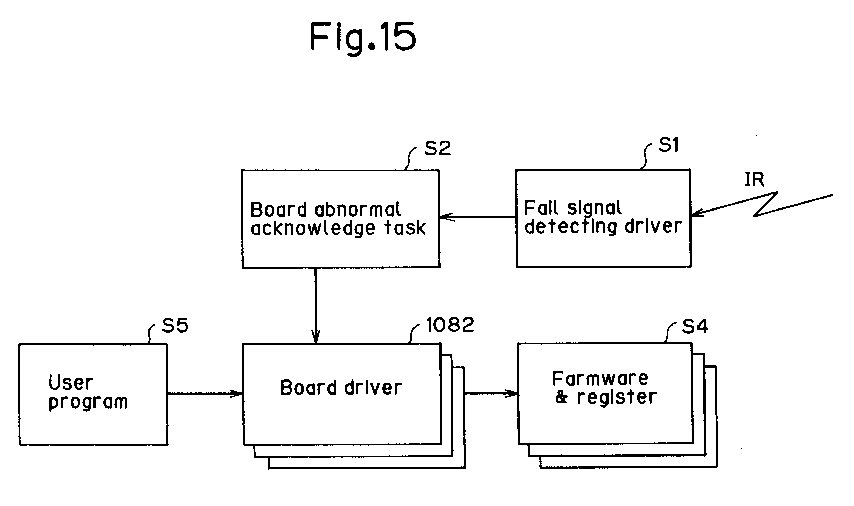

Fig. 15 is a schematic diagram which shows conceptional structure of the software in this invention. This software concept includes the following items:
(1) fail signal detecting driver S1 which accepts fail signal FAIL as interrupt signal IR;
(2) board abnormal acknowledge task S2 started by this fail signal detecting driver S1;
(3) board driver 1082 where self-diagnosis operation is requested by board abnormal acknowledge task S2; and
(4) user program S5 to operate board driver 1082.

Still, farmware and register S4 is a software block on the I/O board side, thereby to execute self-diagnosis operation by board driver 1082.

Function of the above structure is explained in the following.

For example, when such abnormality occurs on the I/O board side, that a watch dog timer informs abnormally, gate array BG on the I/O board side transmits fail signal FAIL on bus B2. VME-bus controller 105 detects this fail signal FAIL on bus B2, and sends interrupt signal IR to main processor 102.

When main processor 102 receives interrupt signal IR, the software shown in Fig. 15 is executed. Namely, fail signal detecting driver S1 detects interrupt signal IR, and notifies this abnormality to board abnormal acknowledge task S2. When board abnormal acknowledge task S2 detects the abnormality of the I/O board, this state is informed to board driver 1082, and this board driver requests a corresponding I/O board to conduct self-diagnosis. The self-diagnosis is executed by board driver 1082.

Board driver 1082 reads an internal register of gate array BG on the I/O board side, and confirms whether or not the I/O board would be abnormal state.

When board driver 1082 acknowledges the abnormal state, this board driver 1082 works upon gate array BG so as to prohibit signal transmission of fail signal FAIL therefrom. Simultaneously, board driver 1082 is changed by itself into error state, so that it can not access to the failured I/O board. Namely, this can be assumed, in a hardware sense, that board driver 1082 functions to separate said I/O board from CPU board 100. As the result, even if user program S5 accesses to board driver 1082 which became to error state, this board driver 1082 replies error signal. That is, this can be assumed, in a software sense, that board driver 1082 functions to separate said I/O board from CPU board 100.

As stated in the above, in this invention, the failured I/O board can be separated promptly from CPU board 100 in both hardware viewpoint and software viewpoint. Thus, by this invention, abnormality of each I/O board is promptly notified to a main processor 102, so that the effect of the failure, such as system shutdown or hang-up, may be made minimum.

Returning to Fig. 7, explanation concerning floppy disk drive controller 108 is done in the following. For example, 3.5 inch floppy disk drive FD1 is connected to floppy disk drive controller 108. In addition, such demand often occurs, that 5 inch floppy disk drive, or 8 inch floppy disk drive must be connected as the system expands. Generally, the 5 inch floppy disk drive and the 8 inch floppy disk drive are connected to 3.5 inch floppy drive FD1 using daisy chain connection method.

However, in the conventional daisy chain system, when the tail drive having a terminal resistor is detached, the daisy chain becomes open, and thus, it is necessary to install newly a terminal resistor in the new tail disk drive. Further, when all floppy disk drives are detached from the daisy chain, a terminal resistor must be installed in main body unit 10 side.

Furthermore, when the power supply of the tail floppy disk drive is turned off, the signal at the terminal resistor turns from pull-up state to pull-down state.

In the above case, it is impossible to execute read/write access to 3.5 inch floppy disk drive FD1.

To overcome the above drawbacks, in the daisy chain system of this invention, terminal resistors are installed in all floppy disk drives connected to the daisy chain. As the result of this, any floppy disk drive may be detachable freely. Further, in each floppy disk drive, buffers are provided in parallel with an internal receiver. Thus, even when any of these floppy disk drives is turned off, there occurs no adverse effects.

Fig. 16 is a schematic diagram which shows connection of the floppy disk drive system in this invention.

In this example, 5 inch floppy disk drive FD2 and 8 inch floppy disk drive FD3 are connected, by daisy chain structure, to transmission/reception portion FD10 for 3.5 inch floppy disk drive arranged in main body 10, through lines L1 and L2.

The feature of this system is in that terminal resistors FD1Z, FD2Z, and FD3Z are connected to daisy chain receivers FD1R, FD2R and FD3R of transmission/reception portions FD10, FD20 and FD30 in each floppy disk drive.

Further, the another feature of this system is in that buffer (receiver FD1I and driver FD1A) is connected in parallel with daisy chain receiver FD1R in main body unit 10.

In the same manner, in 5 inch floppy disk drive FD2, buffer (receiver FD2I and driver FD2A) is connected in parallel with daisy chain receiver FD2R.

Namely, in this system, terminal resistors are installed in all floppy disk drives to be connected to the daisy chain, and each floppy disk drive is connected, through the buffer (the receiver and the driver), to the next floppy disk drive.

Assuming that 5 inch floppy disk drive FD2 or 8 inch floppy disk drive FD3 becomes needless in operation, when one of these floppy disk drives is detached from the system, the floppy disk drive previous to the detached floppy disk drive becomes a new tail drive. In this case, since all floppy disk drives have the terminal resistors, it is unnecessary to install the terminal resistor in the new tail drive.

Assuming that a new floppy disk drive is connected to the daisy chain, since in this floppy disk drive, a terminal resistor is also installed, there occurs no adverse effect.

Next, assuming that the power supply of 5 inch floppy disk drive FD2 or 8 inch floppy disk drive FD3 is turned off in operation, an output signal from driver 108D of floppy disk controller 108 in main body unit 10 is isolated with receiver FD1I and driver FD1A from the external floppy disk drives, and thus, floppy disk controller 108 does not receive any adverse effect resulting from the cut off of power supply in the external floppy disk drives.

For example, open-collector type is employed for the signal output of the external floppy disk drive, and thus, main body 10 and respective floppy disk drives does not receive any adverse effect resulting from the cut off of power supply in other floppy disk drives.

In accordance with these floppy disk drive connection system, following advantages can be obtained.
(1) It is unnecessary to install a terminal resistor in the drive previous to the tail drive, when the tail drive is detached from the daisy chain.
(2) Moreover, the system of this invention does not receive any adverse effect even when the power supply of the external floppy disk drive is on-off switched.
(3) Floppy disk drives may be connected to or detached from the main body unit freely.
(4) Changing of the system configuration becomes easy because on-off switching can be done arbitrarily.

Explanation as to software program to be loaded in the above hardware structure is done in the following.

In a factory automation, the line computer controls various kinds of equipments installed to a manufacturing line site. In the line computer, interpreter type language is loaded in order to execute real time processing. In general, these control program is made by use of BASIC interpreter type language. When the control program is inputted, the BASIC interpreter installed in the line computer generates middle codes, and then the control program is executed by interpreting the above middle codes.

By the way, the program language includes such compiler type language as C language, other than the above interpreter type language. In case of the program made by the compiler type language, the program can be executed in high speed since the program is once converted into execution form program by the compiler.

In the factory automation field, there occurs such demand that the compiler type language has to be used in a place where high-speed processing is necessary. Actually, control programs described by the compiler language increase day by day.

However, in the conventional apparatus, it is difficult to make the program in execution form made by the compiler type language exist together in the middle word area of the interpreter type language in the user area of the memory, by the following reasons.
(1) The interpreter of the system is not provided with function to load such execution type program.
(2) Since method for delivering arguments from the interpreter type program to the execution type program depends upon language type, the interface therebetween can not be determined uniquely.
(3) Address value corresponding to the position dependence type code in the execution form program is influenced by amendment of the interpreter type language program.

In this invention, the execution form program made by the compiler type language can be included in the interpreter type language program. The method to make the execution form program made by the compiler type language contain in the interpreter type language program, is as follows.
(1) In accordance with adapter procedure, the arguments in the interpreter type language program are taken into the execution type program side, and main function is set for it.
(2) The static variables in the execution form program are copied from data area to a first static area, every time when the interpreter type language program is executed.
(3) When the interpreter type program involves places to be amended, by pre-run processing, all the contents of the branching destination addresses specified by all position dependence codes in the execution form program, are rewritten.

By the above procedures, the system allows coexistence of the programs.

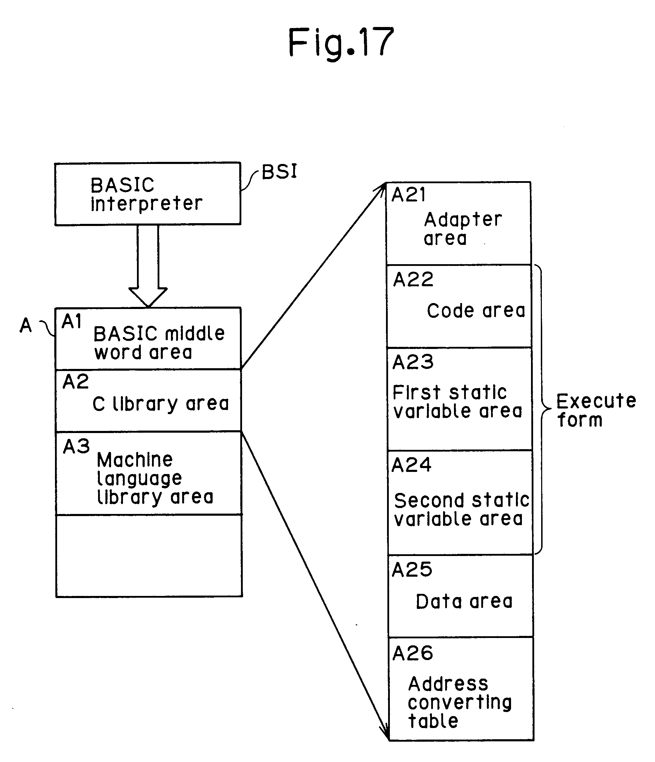

Fig. 17 shows the allocation of software programs in user memory area A, in which the execution type program made by the compiler type language is loaded in the middle word area A1 of the inter preter type program. In this example, BASIC language is used for the interpreter type language, and C language is used for the compiler type language.

Namely, the user area A of the memory is constituted by BASIC middle word area A1 where BASIC middle word is set, C library area A2 where C language library is set, and machine word library area A3 where machine language library is set.

In usual operation, BASIC interpreter BSI reads BASIC middle word area A1, and executes this.

In addition, in C library area A2, adapter area A21, code area A22 for storing the code actually used by the user, first static variable area A23 for storing the static variable of which initial value is set, second static variable area A24 of which initial value is not set, data area A25 for storing the initial value of the static variable, and address converting table A26 for rewriting address values of the position dependent code in code area A22 are set.

In the conventional apparatus, C library of the execution form, described in the user area, is configured from code area A22, first static variable area A23, and second static variable area A24. However, in this invention, adapter area A21, data area A25 and address converting table A26 are additionally provided in this area.

Detail functions of these area A21, A25 and A26 are as follows:

BASIC interpreter BSI calls adapter area A21 through a common interface which functions to call the compiled execution program as a subroutine.

Programs in adapter area A21 functions to pile various arguments in BASIC middle word in a stack, and call the main function in C library.

Initial value data to be set in first static variable area A23, is stored in data area A25, and is copied to first static variable area A23 when pre-run of BASIC interpreter BSI is carried out. Second static variable area A24 where static variable having no set initial value is stored, is initialized to 0 when the above pre-run is carried out.

Pre-run of BASIC interpreter BSI means such processing as one carried out prior to program-execution in order to secure data or processing table area to be used at execution period.

By the way, if a BASIC program is changed after the C language was loaded to the BASIC middle word area, the position of the C library on the user memory area A may shift since the C library includes such position dependent code as branch instruction or jump instruction.

Accordingly, if the position of the C library shifts, the branch destination address specified by the inside instruction code shifts from the address of the instruction code to be actually executed, and therefore, it is difficult to execute the C library correctly.

By pre-run processing of the BASIC program in this invention, the branch destination address in the position dependent code is converted in accordance with address converting table A26.

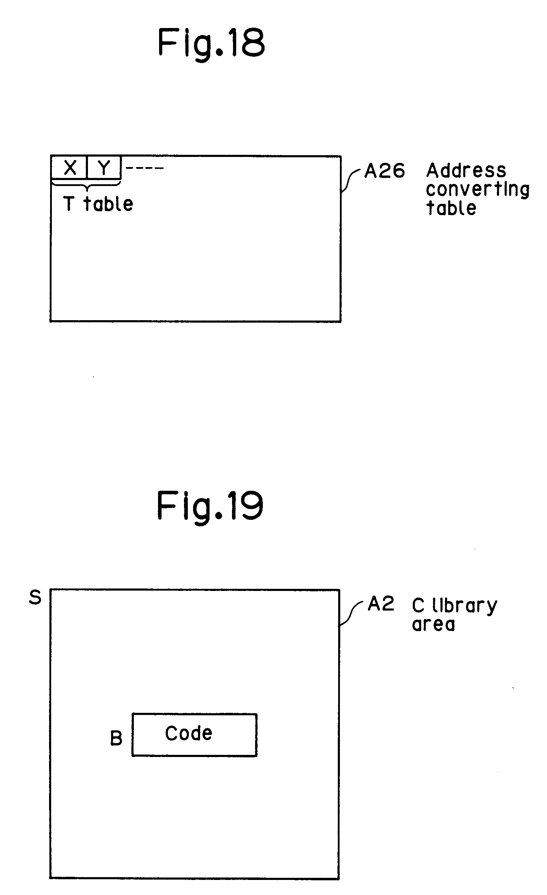

Namely, Fig. 18 shows the configuration of address converting table A26, in which a table T is allocated to each position dependent type code. In a table T, value X represents relative address value from top address to said position dependent code address in C library area A2, and value Y represents relative address value from the top address to the branch destination address in C library area A2.

Tables T (X, Y) are arranged in address converting table A26 in response to the number of the position dependent codes in the C library.

In Fig. 19, assume that the position dependent code locates at address B in C library area A2 of which top address is S (S: relative address between the top address of the memory area and the top address of C library area A2, B: relative address between the top address of the memory area and the location address of the code in C library area A2). The value of the branch destination address is given by S + Y in accordance with table T in Fig. 18. When the BASIC program is amended and when the top address in C library area A2 changes from S to S′, the branch destination address is rewritten as S′ + Y.

Thus, in this invention, the position dependent type code in the C library does not receive any adverse effects even though the original BASIC program is changed.

As aforementioned, in accordance with this invention, the execution program made by the compiler language can be loaded to the middle word area of BASIC program.

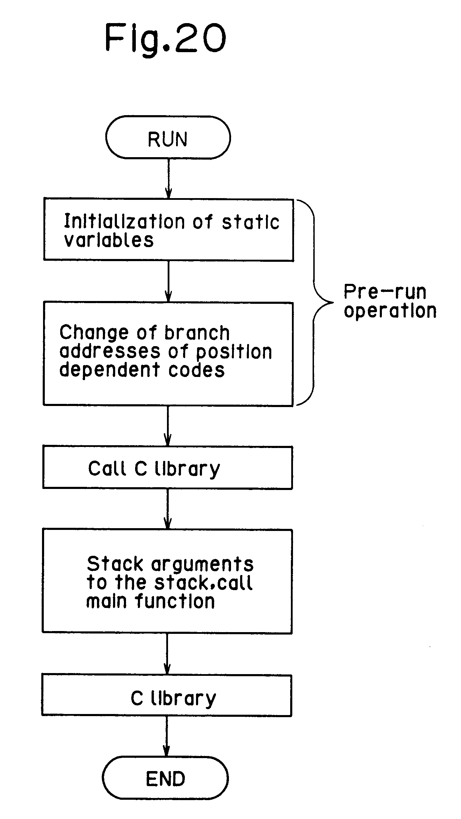

Fig. 20 is a flow chart when BASIC interpreter BSI calls C library.

When the BASIC program starts, in the C library, the initial value data in data area A25 is written into first static variable area A23, and "0" is written into second static variable area A24.

And by pre-run processing, all branch destination addresses of position dependent type codes in code area A22 are corrected in accordance with address converting table A26.

The operation stated heretofore is pre-run processing for starting the BASIC program.

When the BASIC program starts, the C library is called as a subroutine. Common interface functions to start the program in adapter area A21. And this adapter area A21 piles up arguments from the middle word area A1 of the BASIC program, and calls main functions. Then, the C library is started and the compiled C language program is executed.

As aforementioned, in this invention, the execution form program compiled by C language can be loaded in the middle word area of the BASIC program. Further, the line computer of this invention can use the compiler type language for high speed processing demand, other than the usual interpreter type language.

## Claims

1. A line computer, comprising:
a main processor (102) controlling each element of the line computer;
a first bus (B1) connected to said main processor (102);
a main memory (MM) connected to said first bus (B1), and accessed by said main processor (102);
a second bus (B4) having a smaller bit number than that of said first bus (B1); and
a communication processing portion (115) connected to said second bus (B4), which executes communication processing with other line computers;
characterized in that:
a Direct Memory Access (DMA) controller (104), connected to said first bus (B1) executes direct memory access with said main memory (MM) and a Small Computer Systems Interface (SCSI) controller or a floppy disk controller (108);
a Versa Module Europe-bus controller (105), connected to said first bus (B1) controls various Input/Output (I/O) boards (C1, C2, ..., Cn) via a versa Module Europe-bus (B2);
a Cathode Ray Tube (CRT) displaying controller (117), connected to said second bus (B4) has a graphic display controller (116) to control graphic display on a Cathode Ray Tube (CRT) display apparatus and a character display controller to control character display;
a third bus (B3) has a smaller bit number than that of said first bus (B1);
a slave processor (110) is connected to said third bus (B3);
a calendar clock device (112) transmits a software timer interruption signal to said slave processor (110);
a peripheral device control portion (111), connected to said third bus (B3) controls a printer (50), serial signal communication (RS232C) and a keyboard (KB);
a peripheral controller (106), arranged between said first bus (B1) and said third bus (B3) adjusts operation timing of said main processor (102) and said slave processor (110); and
a timing control circuit (5, 101), connected between said first bus (B1) and said second bus (B4) comprises a buffer (5b) and a control circuit (5c), wherein:
said buffer (5b) latches data on said first bus (B1) or said second bus (B4); and
said control circuit (5c) functions to delay an address strobe signal (SAS) and a data strobe signal (SDS) asserted by said main processor (1, 102), when a read signal is applied from said main processor (1, 102), said control circuit (5c) transmitting a chip select signal (P̅C̅S̅1̅, P̅C̅S̅2̅) for prohibiting transmission before said address strobe signal and said data strobe signal are negated, said control circuit (5c) instructing to store the read data in said buffer (5b) and generating a timing signal by which the stored data is transmitted to said first bus (B1), said control circuit (5c) functioning to delay the address strobe signal and the data strobe signal asserted by said main processor (1, 102) when a write signal is applied from said main processor (1, 102), said control circuit (5c) instructing to store the write data in said buffer (5b) and generating a timing signal by which the stored data is transmitted to said second bus (B4), and afterwards said control circuit (5c) generating said chip select signal.

2. The line computer of claim 1, wherein said calender clock device to generate a software timer interruption signal comprises:
a divider (1212) which generates frequency divided clock pulse by frequency-dividing the standard clock pulse applied from an identical standard clock pulse generating means (1211);
a first counting means (1213, 1214) counting said divided clock pulse until the number which is larger by one clock pulse than that equivalent to a fixed software timer interruption period, and generating an output as said software timer interruption signal;
a second counting means (1213, 1214) counting said divided clock pulse until the number which is smaller by one clock pulse than that equivalent to said software timer interruption period, and generating an output as said software timer interruption period;
setting means (1217, 1218) for setting a first setting value and a second setting value in such a way as (the clock pulse number which coincides with multiple of the time equivalent to said software timer interruption period) = (the clock pulse number counted by said first counting means) * (a first setting value) + (the clock pulse number counted by said second counting means) * (a second setting value); and
switching means (1217) for switching said first counting means (1213, 1214) and said second counting means (1213, 1214) in accordance with each counted value.

3. The line computer of claim 1, wherein
information storage area of a single memory element (RAM 201) in said character display controller in said Cathode Ray Tube (CRT) displaying controller (117), is divided into a code area (201a), an attribute area (201b) and a font area (201c);
character code, attribute data and font pattern are stored in said areas (201a, 201b, 201c) respectively; and
reading operation in said code area (201a), reading operation in attribute area (201b), read/write access from said main processor (102) to said memory (201), reading operation in said font area (201c) corresponding to the character code read out from said code area (201a) are executed sequentially and in time-sharing manner, or simultaneous reading operation both in said code area (201a) and said attribute area (201b), read/write access from said main processor (1019 to said single memory element (201), reading operation in said font area (201c) corresponding to the character code read out from said code area (201a) are executed sequentially and in time-sharing manner, one display cycle being constituted by a set of these operations.

4. The line computer of claim 1, wherein:
said Versa Module Europe-bus controller (105) has multiple Input/Output boards connected to Versa Module Europe-bus (B2);
Input/Output board drivers (1082) are set on the main processor (102) side corresponding to respective said Input/Output boards (C1, C2, ..., Cn);
a control circuit (1081, 1082) generates a fail signal when abnormality is detected in said Input/Output board;
abnormality detection means (1081) generates diagnosis request in response to the fail signal on the main processor (102) side;
a self-diagnosis portion (1082a) is provided in said Input/Output board driver (1082), which makes said Input/Output board (C1, C2, ..., Cn) execute self-diagnosis operation in response to said diagnosis request and receives the result of the self-diagnosis from said Input/Output board (C1, C2, ..., Cn); and
board separating means (1082b) is provided in said Input/Output board driver (1082), which gives a separating signal to said control circuit (1081, 1082) when said diagnosis signal represents abnormality, so as to separate said Input/Output driver (1082) from said main processor (102) side and turn said Input/Output driver (1082) to error state.

5. The line computer of claim 1, wherein:
at least one or more floppy disk drives (FD2, FD3) are connected to said floppy disk controller (108) in a daisy chain manner;
terminal resistors (FD1Z, FD2Z, FD3Z) are provided in respective daisy chain receivers (FD1R, FD2R, FD3R) in said floppy disk drivers (FD2, FD3); and
buffers (FD1I&FD1A, FD2I&FD2A) are provided, in parallel in said daisy chain receivers (FD1R, FD2R, FD3R) in all floppy disk drive installed at the most rear.

## Patentansprüche

1. Ein Linien- bzw. Line-Computer mit:
einer Haupt-Verarbeitungsvorrichtung (102), welche jedes Element des Line-Computers regelt;
einem ersten Bus (B1), der mit der Haupt-Verarbeitungsvorrichtung (102) verbunden ist;
einem Hauptspeicher (MM), der mit dem ersten Bus (B1) verbunden ist und auf den durch die Haupt-Verarbeitungsvorrichtung (102) zugegriffen wird;
einem zweiten Bus (B4), der eine geringere Bitzahl besitzt als die des ersten Buses (B1); und
einem Verbindungs- bzw. Kommunikationsverarbeitungsteil (115), verbunden mit dem zweiten Bus (B4), der eine Kommunikationsverarbeitung mit anderen Line-Computern ausführt;
dadurch gekennzeichnet, daß:
ein Direkt-Speicherzugriff-(DMA)-Regler (104), der mit dem ersten Bus (B1) verbunden ist, einen Direkt-Speicherzugriff mit dem Hauptspeicher (MM) und einem Schnittstellen-(SCSI)-Regler für Kleincomputersysteme (107) oder einem Floppy-Disk- bzw. Diskettenregler (108) ausführt;
ein Regler (105) für einen Versa-Module-Europe-Bus, der mit dem ersten Bus (B1) verbunden ist, verschiedene Eingabe/Ausgabe-(I/O)-Karten (C1, C2, ..., Cn) über einen Versa-Module-Europe-Bus (B2) regelt;
ein Anzeigenregler (117) für eine Kathodenstahlröhre (CRT), der mit dem zweiten Bus (B4) verbunden ist, einen Regler (116) für eine graphische Anzeige, um eine graphische Anzeige auf einem Kathodenstrahlröhren-(CRT)-Anzeigegerät zu regeln, und einen Zeichen-Anzeigenregler besitzt, um eine Zeichenanzeige zu regeln;
ein dritter Bus (B3) eine geringere Bitzahl als die des ersten Buses (B1) besitzt;
eine Tochter- bzw. Neben-Verarbeitungsvorrichtung (110) mit dem dritten Bus (B3) verbunden ist;
eine Kalender-Taktgebervorrichtung (112) ein Unterbrechungssignal für einen Software-Zeitgeber zu der Neben-Verarbeitungsvorrichtung (110) überträgt;
ein Regelungsteil (111) für eine Peripherievorrichtung, der mit dem dritten Bus (B3) verbunden ist, einen Drucker (50), eine serielle Signalverbindung (RS232C) und eine Tastatur (KB) regelt;
ein Peripherieregler (106), der zwischen den ersten Bus (B1) und den dritten Bus (B3) angeordnet ist, eine Operations- bzw. Funktionszeiteinstellung der Haupt-Verarbeitungsvorrichtung (102) und der Neben-Verarbeitungsvorrichtung (110) einstellt; und
eine Regelungsschaltung (5, 101) für eine Zeiteinstellung, die zwischen den ersten Bus (B1) und den zweiten Bus (B4) geschaltet ist, einen Puffer (5b) und eine Regelungsschaltung (5c) enthält, worin:
der Puffer (5b) Daten auf dem ersten Bus (B1) oder dem zweiten Bus (B4) hält; und
die Regelungsschaltung (5c) arbeitet, um ein Adreß-Abtastsignal (SAS) und ein Daten-Abtastsignal (SDS) zu verzögern, die durch die Haupt-Verarbeitungsvorrichtung (1, 102) bestimmt bzw. bestätigt werden wenn ein Lesesignal von der Haupt-Verarbeitungsvorrichtung (1, 102) angelegt wird, wobei die Regelungsschaltung (5c) ein Chip-Auswahlsignal ($\overline{\text{PCS} \text{1}}$, $\overline{\text{PCS} \text{2}}$) überträgt, um eine Übertragung zu verhindern, bevor das Adreß-Abtastsignal und das Daten-Abtastsignal negiert werden, wobei die Regelungsschaltung (5c) befiehlt, die Lesedaten in dem Puffer (5b) zu speichern, und ein Zeiteinstellungssignal erzeugt, durch welches die gespeicherten Daten zu dem ersten Bus (B1) übertragen werden, wobei die Regelungsschaltung (5c) arbeitet, um das Adreß-Abtastsignal und das Daten-Abtastsignal zu verzögern, die durch die Haupt-Verarbeitungsvorrichtung (1, 102) bestimmt bzw. bestätigt werden, wenn ein Schreibsignal von der Haupt-Verarbeitungsvorrichtung (1, 102) angelegt wird, wobei die Regelungsschaltung (5c) befiehlt, die Schreibdaten in dem Puffer (5b) zu speichern, und ein Zeiteinstellungsignal erzeugt, durch welches die gespeicherten Daten zu dem zweiten Bus (B4) übertragen werden, und wobei nachher die Regelungsschaltung (5c) das Chip-Auswahlsignal erzeugt.

2. Der Line-Computer nach Anspruch 1, worin die Kalender-Taktgebervorrichtung, um ein Unterbrechungssignal für einen Software-Zeitgeber zu erzeugen, enthält:
eine Teilvorrichtung (1212), die einen frequenzgeteilten Taktimpuls erzeugt, indem der Standard-Taktimpuls frequenzgeteilt wird, der von einem identischen Erzeugungsmittel (1211) für einen Standard-Taktimpuls angelegt wird;
ein erstes Zählmittel (1213, 1214), das den geteilten Taktimpuls bis zu der Zahl zählt, welche um einen Taktimpuls größer als diejenige ist, die einer festen Unterbrechungsperiode für einen Software-Zeitgeber entspricht, und eine Ausgabe als das Unterbrechungssignal für einen Software-Zeitgeber erzeugt;
ein zweites Zählmittel (1213, 1214), das den geteilten Taktimpuls bis zu der Zahl zählt, die um einen Taktimpuls kleiner als diejenige ist, welche der Unterbrechungsperiode für den Software-Zeitgeber entspricht, und eine Ausgabe als die Unterbrechungsperiode für einen Software-Zeitgeber erzeugt;
Einstellmittel (1217, 1218), um einen ersten Einstellwert und einen zweiten Einstellwert derart einzustellen, daß (die Taktimpulszahl, die mit einem Vielfachen der Zeit übereinstimmt, die der Unterbrechungsperiode für einen Software-Zeitgeber entspricht) = (die Taktimpulszahl, welche durch das erste Zählmittel gezählt wird) * (ein erster Einstellwert) + (die Taktimpulszahl, welche durch das zweite Zählmittel gezählt wird) * (ein zweiter Einstellwert) gilt; und
Umschaltmittel (1217), um das erste Zählmittel (1213, 1214) und das zweite Zählmittel (1213, 1214) gemäß jedem gezählten Wert umzuschalten.

3. Der Line-Computer nach Anspruch 1, worin
ein Informationsspeicherbereich eines einzelnen Speicherelements (RAM 201) in dem Zeichen-Anzeigenregler in dem Anzeigenregler (117) für eine Kathodenstrahlröhre (CRT) in einen Codebereich (201a), einen Attributbereich (201b) und einen Zeichensatz- bzw. Fontbereich (201c) geteilt ist;
Zeichencode; Attributdaten und Fontmuster in den Bereichen (201a, 201b, 201c) jeweils gespeichert sind; und
eine Leseoperation in dem Codebereich (201a), eine Leseoperation in dem Attributbereich (201b), ein Lese/Schreibzugriff von der Haupt-Verarbeitungsvorrichtung (102) auf den Speicher (201), eine Leseoperation in dem Fontbereich (201c) entsprechend dem aus dem Codebereich (201a) ausgelesenen Zeichencode sequentiell und in einer zeitgeteilten bzw. zeitgeschachtelten Weise ausgeführt werden oder eine gleichzeitige Leseoperation sowohl in dem Codebereich (201a) als auch dem Attributbereich (201b), ein Lese/Schreibzugriff von der Haupt-Verarbeitungsvorrichtung (102) auf das einzelne Speicherelement (201), eine Leseoperation in dem Fontbereich (201c) entsprechend dem aus dem Codebereich (201a) ausgelesenen Zeichencode sequentiell und in einer zeitgeschachtelten Weise ausgeführt werden, wobei ein Anzeigezyklus durch einen Satz bzw. eine Gruppe dieser Operationen gebildet wird.

4. Der Line-Computer nach Anspruch 1, worin:
der Regler (105) für einen Versa-Module-Europe-Bus mehrfache Eingabe/Ausgabe-Karten aufweist, die mit einem Versa-Module-Europe-Bus (B2) verbunden sind;
Eingabe/Ausgabe-Kartensteuervorrichtungen (1082) auf der Haupt-Verarbeitungsvorrichtungsseite (102) entsprechend jeweiligen den Eingabe/Ausgabe-Karten (C1, C2, ..., Cn) angeordnet sind;
eine Regelungseinheit (1081, 1082) ein Fehlersignal erzeugt, wenn eine Abnormität in der Eingabe/Ausgabe-Karte festgestellt wird;
ein Abnormitäts-Feststellungsmittel (1081) eine Diagnoseforderung als Antwort auf das Fehlersignal auf der Haupt-Verarbeitungsvorrichtungsseite (102) erzeugt;
ein Selbstdiagnoseteil (1082a) in der Eingabe/Ausgabe-Kartensteuervorrichtung (1082) vorgesehen ist, der veranlaßt, daß die Eingabe/Ausgabe-Karte (C1, C2, ..., Cn) eine Selbstdiagnose-Operation als Antwort auf die Selbstdiagnoseforderung ausführt, und das Ergebnis der Selbstdiagnose von der Eingabe/Ausgabe-Karte (C1, C2, ..., Cn) empfängt; und
ein Kartentrennmittel (1082b) in der Eingabe/Ausgabe-Kartensteuervorrichtung (1082) vorgesehen ist, das ein Trennsignal an die Regelungsschaltung (1081, 1082) gibt, wenn das Diagnosesignal eine Abnormität repräsentiert, um so die Eingabe/Ausgabe-Steuervorrichtung (1082) von der Haupt-Verarbeitungsvorrichtungsseite (102) zu trennen und die Eingabe/Ausgabe-Steuervorrichtung (1082) in einen Fehlerzustand zu versetzen.

5. Der Line-Computer nach Anspruch 1, worin:
mindestens eine oder mehr Diskettensteuervorrichtungen (FD2, FD3) mit dem Diskettenregler (108) kettenförmig verbunden sind;
Endwiderstände (FD1Z, FD2Z, FD3Z) in jeweiligen Kettenempfängern (FD1R, FD2R, FD3R) in den Diskettensteuervorrichtungen (FD2, FD3) vorgesehen sind; und
Puffer (FD1I&FD1A, FD2I&FD2A) parallel in den Kettenempfängern (FD1R, FD2R, FD3R) in allen Diskettensteuervorrichtungen im hintersten Teil eingebaut vorgesehen sind.

## Revendications

1. Un ordinateur de ligne, qui comprend:
un processeur principal (102) qui commande chaque élément de l'ordinateur de ligne;
un premier bus (B1) relié audit processeur principal (102);
une mémoire principale (MM) reliée audit premier bus (B1) et à laquelle ledit processeur principal (102) accède;
un deuxième bus (B4) dont le nombre de bits est plus faible que celui dudit premier bus (B1); et
une partie de traitement (115) de communication reliée audit deuxième bus (B4), qui exécute un traitement de communication avec d'autres ordinateurs de lignes;
caractérisé en ce que:
un dispositif de commande (104) d'Accès Direct en Mémoire (DMA) relié audit premier bus (B1) exécute un accès direct en mémoire avec ladite mémoire principale (MM) et un dispositif de commande d'Interface pour petit système d'ordinateur (SCSI) ou un dispositif de commande (108) de disque souple;
un dispositif de commande (105) de bus Versa Module Europe, relié audit premier bus (B1) commande diverses cartes d'entrée/sortie (ou E/S) (C1, C2, ..., Cn) par l'intermédiaire d'un bus Versa Module Europe (B2);
un dispositif de commande (117) d'affichage à tube à rayons cathodiques (ou CRT) relié audit deuxième bus (B4) inclut un dispositif de commande (116) d'affichage de graphiques, afin de commander un affichage de graphiques sur un appareil d'affichage à tube à rayons cathodiques (ou CRT), et un dispositif de commande d'affichage de caractères pour commander un affichage de caractères;
un troisième bus (B3) comporte un nombre de bits plus petit que celui dudit premier bus (B1);
un processeur asservi (110) est relié audit troisième bus (B3);
un dispositif (112) d'horloge dateuse transmet un signal d'interruption d'horloge de logiciel audit processeur asservi (110);
une partie de commande (111) de dispositifs périphériques, reliée audit troisième bus (B3) commande une imprimante (50), une communication sérielle de signaux (RS232C) et un clavier (KB);
un dispositif de commande (106) de périphériques, agencé entre ledit premier bus (B1) et ledit troisième bus (B3) ajuste la synchronisation de fonctionnement dudit processeur principal (102) et dudit processeur asservi (110); et
un circuit de commande (5, 101) de synchronisation, relié entre ledit premier bus (B1) et ledit deuxième bus (B4) comprend un tampon (5b) et un circuit de commande (5c), dans lequel:
ledit tampon (5b) mémorise en sas des données présentes sur ledit premier bus (B1) ou sur ledit deuxième bus (B4); et
ledit circuit de commande (5c) fonctionne de manière à retarder un signal d'impulsion d'adresse (SAS) et un signal d'impulsion de donnée (SDS) affirmés par ledit processeur principal (1, 102), lorsqu'un signal de lecture est appliqué par ledit processeur principal (1, 102), ledit circuit de commande (5c) transmettant un signal de choix de micro-plaquette (PSC1, PSC2) pour interdire une transmission avant que ledit signal d'impulsion d'adresse et ledit signal d'impulsion de donnée ne soit niés, ledit circuit de commande (5c) donnant instruction de mémoriser la donnée de lecture dans ledit tampon (5b) et engendrant un signal de synchronisation par lequel la donnée mémorisée est transmise audit premier bus (B1), ledit circuit de commande (5c) fonctionnant de manière à retarder le signal d'impulsion d'adresse et le signal d'impulsion de donnée affirmés par ledit processeur principal (1, 102) lorsqu'un signal d'écriture est appliqué par ledit processeur (1, 102), ledit circuit de commande (5c) donnant instruction de mémoriser la donnée d'écriture dans ledit tampon (5b) et engendrant un signal de synchronisation par lequel la donnée mémorisée est transmise audit deuxième bus (B4), et ledit circuit de commande (5c) engendrant ensuite ledit signal de choix de micro-plaquette.

2. L'ordinateur de ligne selon la revendication 1, dans lequel ledit dispositif d'horloge dateuse destiné à engendrer un signal d'interruption d'horloge de logiciel comprend:
un diviseur (1212) qui engendre une impulsion d'horloge à fréquence divisée en divisant en fréquence l'impulsion classique de signal d'horloge appliquée par un moyen générateur identique classique (1211) de signaux d'horloge;
un premier moyen compteur (1213, 1214) qui compte ladite impulsion divisée de signal d'horloge jusqu'au nombre qui est supérieur, d'une impulsion de signal d'horloge, au nombre équivalent à une période d'interruption fixe d'horloge de logiciel, et qui engendre une sortie en tant que ledit signal d'interruption d'horloge de logiciel;
un deuxième moyen compteur (1213, 1214) qui compte ladite impulsion divisée de signal d'horloge jusqu'au nombre qui est inférieur, d'une impulsion de signal d'horloge, au nombre équivalent à ladite période d'interruption d'horloge de logiciel, et qui engendre une sortie en tant que ledit signal d'interruption d'horloge de logiciel;
un moyen de réglage (1217, 1218) pour régler une première valeur de réglage et une deuxième valeur de réglage d'une manière telle que (le nombre d'impulsions de signaux d'horloge qui coïncide avec un multiple de l'équivalent en temps de ladite période d'interruption d'horloge de logiciel) = (le nombre d'impulsions de signaux d'horloge comptées par ledit premier moyen compteur) * (une première valeur de réglage) + (le nombre d'impulsions de signaux d'horloge comptées par ledit deuxième moyen compteur) * (une deuxième valeur de réglage); et
un moyen commutateur (1217) pour commuter ledit premier moyen compteur (1213, 1214) et ledit deuxième moyen compteur (1213, 1214) conformément à chaque valeur comptée.

3. L'ordinateur de ligne selon la revendication 1, dans lequel
une zone de mémorisation d'information d'un élément unique de mémoire (RAM 201) dans ledit dispositif de commande d'affichage de caractères dudit dispositif de commande (117) d'affichage à tube à rayons cathodiques (CRT) est divisée en une zone de code (201a), une zone d'attribut (201b) et une zone de police (201c);
un code de caractères, une donnée d'attribut et une configuration de police sont mémorisés dans lesdites zones (201a, 201b, 201c) respectivement; et
une opération de lecture dans ladite zone de code (201a), une opération de lecture dans la zone d'attribut (201b), un accès de lecture/d'écriture dudit processeur principal (102) à ladite mémoire (201), une opération de lecture dans ladite zone de police (201c) qui correspond au code de caractères lu dans ladite zone de code (201a) sont exécutés en séquence et selon un mode en temps partagé, ou une opération simultanée de lecture dans ladite zone de code (201a) et dans ladite zone d'attribut (201b), un accès de lecture/d'écriture dudit processeur principal (1019) audit élément unique de mémoire (201), une opération de lecture dans ladite zone de police (201c) qui correspond au code de caractères lu dans ladite zone de code (201a) sont exécutés en séquence et selon un mode en temps partagé, un cycle d'affichage étant constitué par un ensemble de ces opérations.

4. L'ordinateur de ligne selon la revendication 1, dans lequel:
ledit dispositif de commande (105) de bus Versa Module Europe inclut de multiples cartes d'Entrée/Sortie reliées audit bus Versa Module Europe (B2);
des gestionnaire-pilotes-pilotes (1082) de cartes d'Entrée/Sortie sont placés sur le côté du processeur principal (102) en correspondance avec lesdites cartes respectives d'Entrée/Sortie (C1, C2, ..., Cn);
un circuit de commande (1081, 1082) engendre un signal de défaillance lorsqu'une anomalie est détectée dans ladite carte d'entrée/sortie;
un moyen détecteur (1081) d'anomalie engendre une demande de diagnostic en réponse au signal de défaillance sur le côté dudit processeur principal (102);
une partie d'auto-diagnostic (1082a) est installée dans ledit gestionnaire-pilote (1082) de carte d'entrée/sortie, ce qui amène ladite carte d'entrée/sortie (C1, C2, ..., Cn) à exécuter une opération d'auto-diagnostic en réponse à ladite demande de diagnostic, et reçoit de ladite carte d'entrée/sortie (C1, C2, ..., Cn) le résultat de l'auto-diagnostic; et
un moyen séparateur (1082) de carte, qui envoie un signal de séparation audit circuit de commande (1080, 1082) lorsque ledit signal de diagnostic représente une anomalie, est disposé dans ledit gestionnaire-pilote (1082) de carte d'entrée/sortie afin de séparer du côté dudit processeur (102) ledit gestionnaire-pilote (1082) d'entrée/sortie et de faire passer en état d'erreur ledit gestionnaire-pilote (1082) d'entrée/sortie.

5. L'ordinateur de ligne selon la revendication 1, dans lequel:
au moins une ou plusieurs unités de disques souples (FD2, FD3) sont reliées audit dispositif de commande (108) de disques souples en mode de chaîne en marguerite;
des résistances (FD1Z, FD2Z, FD3Z) de bornes sont disposées dans des récepteurs respectifs (FD1R, FD2R, FD3R) de chaîne en marguerite desdites unités de disques souples (FD2, FD3); et
des tampons (FD1I&FD1A, FD2I&FD2A) sont disposés, en parallèle dans lesdits récepteurs (FD1R, FD2R, FD3R) en chaîne en marguerite dans toutes les unités de disques souples installées le plus loin en arrière.
